(19) Europäisches Patentamt
European Patent Office
Office européen des brevets

(11) EP 2 081 087 A1

(12) **EUROPEAN PATENT APPLICATION**
published in accordance with Art. 153(4) EPC

(43) Date of publication:
**22.07.2009 Bulletin 2009/30**

(21) Application number: **07807332.7**

(22) Date of filing: **14.09.2007**

(51) Int Cl.:
***G03G 15/00*** *(2006.01)* ***B32B 27/34*** *(2006.01)*
***G03G 15/16*** *(2006.01)* ***G03G 15/20*** *(2006.01)*

(86) International application number:
**PCT/JP2007/067925**

(87) International publication number:
**WO 2008/035625 (27.03.2008 Gazette 2008/13)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.09.2006 JP 2006253389**

(71) Applicant: **Nitta Corporation**
**Osaka-shi,**
**Osaka 556-0022 (JP)**

(72) Inventors:
- **SUGIMOTO, Takehiko**
**Yamatokohriyama-shi, Nara 639-1085 (JP)**
- **KASAZAKI, Toshiaki**
**Yamatokohriyama-shi, Nara 639-1085 (JP)**
- **NISHIO, Tomohiro**
**Yamatokohriyama-shi, Nara 639-1085 (JP)**
- **INOUE, Shinichi**
**Tokoname-shi, Aichi 479-0834 (JP)**

(74) Representative: **Ackroyd, Robert**
**W.P. Thompson & Co.**
**Eastcheap House**
**Central Approach**
**Letchworth**
**Hertfordshire SG6 3DS (GB)**

(54) **BELT FOR IMAGE FORMING APPARATUS**

(57) This invention provides a belt for an image forming apparatus, comprising at least an elastic layer provided on a base material formed of a polyimide resin, the elastic layer being formed of an imide-modified elastomer. By virtue of the above constitution, the belt for an image forming apparatus can realize high image quality and high-speed printing and has high durability. The imide-modified elastomer is preferably an imide-modified polyurethane elastomer. The storage elastic modulus E' of the imide-modified elastomer at 50°C is preferably 1.0 x $10^6$ to 6.0 x $10^7$ Pa. A release resin layer is preferably provided on the elastic layer.

Fig. 1

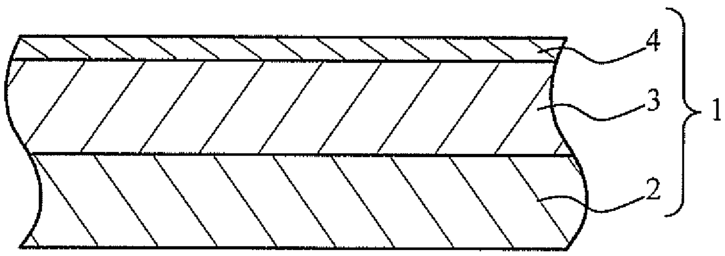


EP 2 081 087 A1

## Description

TECHNICAL FIELD

The present invention relates to belts for image forming apparatuses used in image forming apparatuses such as copying machines, facsimiles and printers.

BACKGROUND ART

In these image forming apparatuses, for example, belts composed of polyimide resin are generally applied to belts for image forming apparatus, such as an intermediate transfer belt used in a transfer section and a fixing belt used in a fixing section, by the necessity of high accuracy drive. Some of these belts are composed of a single layer of polyimide resin. For the purposes of improving durability and toner transfer properties, a two-layer belt having an elastic layer disposed on a polyimide resin serving as a substrate, and a three-layer belt further having a mold releasing resin layer disposed on the elastic layer are often used.

For example, Patent Document 1 describes an intermediate transfer belt constructed of a multilayer of two or more layers having elasticity, in which polyimide resin is used as a substrate, a rubber material is used as an elastic layer, and fluoro resin or the like is used as a mold releasing layer (a mold releasing resin layer). Patent Document 2 describes a film for a fixing section (a fixing belt) having a silicone rubber layer (an elastic layer) and a mold releasing resin layer laminated in this order on a heat-resistant resin layer (a substrate), in which thermosetting polyimide resin or the like is used as a substrate, and fluoro resin is used as a mold releasing resin layer.

The above elastic layer is required to have the following characteristics such as thermal resistance, a proper elastic modulus and adhesive properties with respect to the substrate.

However, when the elastic layer is composed of a rubber material, urethane or the like, thermal resistance and adhesive properties become problems. When the elastic layer is composed of fluoro resin, silicone rubber or the like, adhesive properties become a problem.

On the other hand, Patent Document 3 describes a semiconductive belt for an electrophotography device, whose elastic layer and core layer (substrate) are composed of polyurethane or polyurea. It is described that the elastic modulus of the elastic layer is 1.0 to 60 Mpa. As the elastic modulus generally required for the elastic layer of the belt for an image forming apparatus, the elastic modulus as described in this publication seems suitable.

However, the belt described in Patent Document 3 cannot be subjected to high accuracy drive because polyurethane or the like instead of polyimide resin is used in the substrate.

Patent Document 1: Japanese Unexamined Patent Publication No. 2003-131492
Patent Document 2: Japanese Unexamined Patent Publication No. 11-15303
Patent Document 3: Japanese Unexamined Patent Publication No. 2001-109276

DISCLOSURE OF THE INVENTION

PROBLEMS TO BE SOLVED BY THE INVENTION

It is desirable to provide a belt for an image forming apparatus that achieves high image quality and high speed printing as well as excellent durability by using, as an elastic layer, a material that has thermal resistance and a suitable elastic modulus and also exhibits excellent adhesive properties with respect to a substrate.

MEANS FOR SOLVING THE PROBLEMS

The present inventors considered that the above-mentioned problem could be solved by disposing on a substrate an elastic layer that has excellent thermal resistance, permits easy adjustment of elastic modulus and has excellent affinity of the substrate with respect to polyimide resin. Based on this, they carried out intensive research and found a new measure of applying a specific elastomer to the elastic layer, leading to completion of the present invention.

According to the invention, there is provided a belt for an image forming apparatus having at least an elastic layer on a substrate comprising polyimide resin, wherein the elastic layer comprises an imide-modified elastomer.

EFFECT OF THE INVENTION

Thus, the elastic layer composed of the imide-modified elastomer is disposed on the substrate composed of

the polyimide resin. The elastic modulus is adjustable by changing the imide fraction in the molecular chains of the imide-modified elastomer, enabling the elastic modulus of the elastic layer to be adjusted to a desired value. That is, the elastic modulus of the elastic layer can easily be adjusted to a proper value, so that the belt for an image forming apparatus having the elastic layer on the substrate is capable of achieving high image quality and high speed printing.

Alternatively, when the elastic layer is composed of an imide-modified elastomer having imide component, the affinity with the substrate composed of polyimide resin is increased, suppressing durability deterioration due to the separation therebetween. Further, the belt for an image forming apparatus having the elastic layer composed of the imide-modified elastomer on the substrate composed of polyimide resin becomes the belt having thermal resistance that is required for the fixing belt or the like. Hence, the usefulness of the invention is increased when the belt of the invention is applied to the fixing belt subjected to a vigorous temperature cycle and susceptible to a remarkable separation between the substrate and the elastic layer.

BRIEF DESCRIPTION OF THE DRAWINGS

Fig. 1 is an enlarged schematic sectional view showing a belt for an image forming apparatus according to one preferred embodiment of the invention;
Fig. 2 is the IR spectrum of PIUE (1) obtained in Synthesis Example 1; and
Fig. 3 is the IR spectrum of PIUE (2) obtained in Synthesis Example 2.

PREFERRED EMBODIMENT FOR CARRYING OUT THE INVENTION

<Belt for Image Forming Apparatus>

One preferred embodiment of the belt for an image forming apparatus of the invention will be described in detail with reference to the accompanying drawings. Fig. 1 is an enlarged schematic sectional view showing the belt for an image forming apparatus according to the present embodiment. As shown in Fig. 1, the belt 1 for an image forming apparatus is constructed of a substrate 2, an elastic layer 3 disposed on the substrate 2, and a mold releasing resin layer 4 disposed on the elastic layer 3.

The substrate 2 is composed of polyimide resin. No special limitation is imposed on the polyimide resin, and it can be obtained by subjecting polyamide acid synthesized from acid anhydride and diamine compound to imidization by heat and a catalyst.

Examples of the acid anhydride include aromatic tetracarboxylic dianhydrides such as pyromellitic dianhydride, oxydiphthalic dianhydride, biphenyl-3,4,3',4'-tetracarboxylic dianhydride, benzophenone-3,4,3',4'-tetracarboxylic dianhydride, diphenylsulfone-3,4,3',4'-tetracarboxylic dianhydride, 4,4'-(2,2'-hexafluoroisopropylidene)bis(phthalic anhydride) and cyclobutane-1,2,3,4-tetracarboxylic dianhydride.

Examples of the diamine compound include aromatic diamine compounds such as 1,4-diaminobenzene, 1, 3-diaminobenzene, 2-4-diaminotoluene, 4,4'-diaminodiphenylmethane, 4,4'-diaminodiphenylether, 3,4'-diaminodiphenylether, 3,3'-dimethyl-4,4'-diaminobiphenyl, 2,2'-bis(trifluoromethyl)-4,4'-diaminobiphenyl, 3,7-diamino-dimethyldibenzothiophen-5,5'-dioxide, 4, 4'-diaminobenzophenone, 4,4'-bis(4-aminophenyl) sulfide, 4,4'-diaminobenzanilide and 1,4-bis(4-aminophenoxy) benzene. These polyimide resins are described in, for example, Japanese Patent No. 2560727.

These polyimide resins, because of their structures, have characteristics such as high strength, high thermal resistance and low relaxation properties, which are suitable for a belt material employed in uses where a precise rotation is required. Therefore, by applying polyimide resin to the substrate 2, the polyimide resin can function as a tension retaining body of low tension and high strength, enabling a precise drive of the belt 1. Preferably, the polyimide resin is thermosetting.

When the belt 1 is used as an intermediate transfer belt, in order to impart semiconductivity thereto, it is necessary to disperse a conductive agent in the polyimide resin. The reason for this is as follows. That is, the intermediate transfer belt carries toner on the surface thereof by using static electricity, and a sufficient electrification for causing the toner to be carried thereon cannot be performed under a low electric conductivity, whereas toner scattering occurs under a high electric conductivity. It is therefore necessary to generally control the surface resistance value of the intermediate transfer belt in the range of $10^9$ to $10^{11}$ $\Omega/cm^2$.

As the conductive agent, conductive or semiconductive fine powder can be used. Examples thereof include conductive carbon-based materials such as carbon black and graphite, metals or alloys such as aluminum and copper alloy, and conductive metal oxides such as tin oxide, zinc oxide, antimony oxide, indium oxide, potassium titanate, antimony oxide-tin oxide composite oxide (ATO) and indium oxide-tin oxide composite oxide (ITO). These may be used either singly or as a mixture of two or more selected therefrom.

The content of a conductive material may be arbitrarily selected depending on the conductive agent type and the surface resistance value of the belt. Although no special limitation is imposed thereon, for example, it is preferable that carbon black is usually contained in a ratio of approximately 15 to 20% by weight with respect to 100% by weight of polyimide resin.

The thickness of the substrate 2 is 50 to 200 μm, preferably 100 to 150 μm. This increases the rigidity of the belt 1, and the belt 1 becomes strong against the load in the thrust direction generated during rotation of the belt 1.

The above-mentioned polyimide resin has excellent mechanical characteristics. Consequently, for example, when the belt 1 is used as an intermediate transfer belt, the belt 1 causes less deformation due to the thrust generated when the intermediate transfer belt is pressed against an image carrier by a bias roll. In this state, electric field is allowed to act to electrostatically transfer a toner image onto the intermediate transfer belt, so that thrust load concentration due to the bias roll occurs at a primary transfer section. As a result, toner image aggregation may occur to increase electric charge density, so that electric discharge may occur within a toner layer, thereby changing the toner polarity. This causes an image quality defect, specifically the hollow character of a line image. As means for preventing this image quality defect, the elastic layer 3 is disposed on the substrate 2. That is, the surface of the belt 1 becomes soft by disposing the elastic layer 3 on the substrate 2.

Also, when the belt 1 is used as a fixing belt, it is necessary to dispose an elastic layer 3 on the substrate 2 for the following reason. That is, the belt is used to fix the toner by applying heat and pressure to a printed body (e.g. paper) together with rollers in the fixing section. At this time, when the rigidity of belt surface is too high, the toner particles may be crushed to deteriorate the image resolution. To cope with this problem, the elastic layer 3 is disposed on the substrate 2.

The elastic modulus of the elastic layer 3 needs to be arbitrarily adjusted depending on the purpose thereof and the apparatus type. In the present preferred embodiment, the elastic layer 3 is composed of an imide-modified elastomer. The elastic modulus of the imide-modified elastomer can be easily adjusted by adjusting the content of the imide component in the elastomer. Therefore, the elastic modulus of the elastic layer 3 composed of the imide-modified elastomer can be adjusted to a desired value.

Although no special limitation is imposed on the elastic modulus, it is usually adjusted in the range of $1.0\times10^6$ to $6.0\times10^7$ Pa. Further, the elastic layer 3 composed of the imide-modified elastomer has excellent affinity with the substrate 2 composed of polyimide resin, enabling suppression durability deterioration due to the separation therebetween. Furthermore, the belt 1 having the elastic layer 3 composed of the imide-modified elastomer on the substrate 2 composed of the polyimide resin has thermal resistance that is required for the fixing belt or the like. The elastic modulus corresponds to the value of a storage elastic modulus E' at 50°C obtained by measuring with a dynamic viscoelasticity measuring instrument as will be described later.

Here, the above imide-modified elastomer means elastomer having an imide component. Examples of the elastomer component in the elastomer include polyurethane, unsaturated olefin-based oligomer, acryl-based oligomer, fluoro rubber-based oligomer and silicone-based oligomer. Examples of the imide component include alicyclic monomer, heterocyclic monomer, phenyl ether-based monomer and alkyl side chain monomer.

In the present preferred embodiment, among these imide-modified elastomers as described above, an imide-modified polyurethane elastomer using polyurethane as an elastomer component (hereinafter referred to as "polyimide urethane elastomer" or "PIUE") is preferred because of excellent pliability and excellent adhesive properties with the substrate 2, particularly PIUE (hereinafter also referred to as "PIUE (I)") represented by the following general formula (I):

[Chemical formula 1]

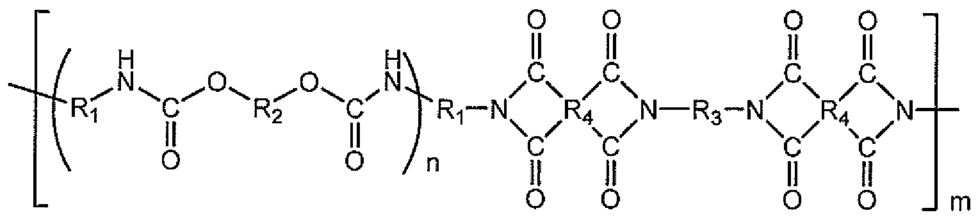

(I)

wherein, $R_1$ represents a divalent organic group having an aromatic ring or an aliphatic ring; $R_2$ represents a divalent organic group having a weight average molecular weight of 100 to 10,000; $R_3$ represents a divalent organic group having an aromatic ring, an aliphatic ring or an aliphatic chain; $R_4$ represents a tetravalent organic group having 4 or more carbon atoms; n represents an integer of 1 to 100; and m represents an integer of 2 to 100.

The PIUE (I) contains polyurethane as an elastomer component, and two successive imide units can be introduced into a main chain at a desired ratio (imide fraction,) while controlling the distribution thereof. These produce the effects that the elastic modulus thereof can be adjusted easily, and that it has excellent pliability and excellent adhesive properties with the substrate 2. The PIUE (I) is a new compound described nowhere.

Specifically, in the above general formula (I), the $R_1$ represents a divalent organic group having an aromatic ring or an aliphatic ring. Examples of the organic group include residues except for an isocyanate group (-NCO) in diisocyanate (a) capable of forming urethane prepolymer (c) together with polyol (b) according to a reaction formula (A) described later.

The $R_2$ represents a divalent organic group having a weight average molecular weight of 100 to 10,000, preferably 300 to 5,000. Examples of the organic group include residues except for two hydroxyl groups (-OH) in the polyol (b) capable of forming the urethane prepolymer (c) together with the diisocyanate (a) according to the reaction formula (A).

The $R_3$ represents a divalent organic group having an aromatic ring, an aliphatic ring or an aliphatic chain. Examples of the organic group include residues except for an amino group ($-NH_2$) in at least one diamine compound (d) selected from aromatic diamine compounds having a carbon number of 6 to 27, aliphatic diamine compounds having a carbon number of 6 to 24, and alicyclic diamine compounds having a carbon number of 6 to 24, each of which is capable of chain extending urethane prepolymer (c) by urea bond according to a reaction formula (B) described later. Examples of the aliphatic chain include those having a carbon number of 1.

The $R_4$ represents a tetravalent organic group having 4 or more carbon atoms. Examples of the organic group include residues of at least one tetracarboxylic dianhydride (f) selected from aromatic tetracarboxylic dianhydrides having a carbon number of 6 to 18, and alicyclic tetracarboxylic dianhydrides having a carbon number of 4 to 6, each of which is capable of introducing an imide unit into an urea bond site according to a reaction formula (C) described later.
The above-mentioned n represents an integer of 1 to 100, preferably an integer of 2 to 50. The above-mentioned m represents an integer of 2 to 100, preferably an integer of 2 to 50.

Specific examples of the PIUE represented by the general formula (I) include PIUEs represented by the following formula (1):

[Chemical formula 2]

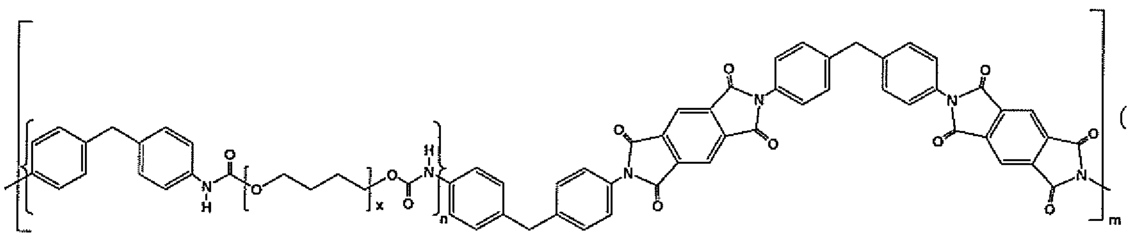

(1)

wherein, n represents an integer of 1 to 100; m represents an integer of 2 to 100; and x represents an integer of 10 to 100.

Preferably, the PIUE represented by the general formula (I) is a block copolymer in which urethane prepolymer having an isocyanate group at both ends of each molecule obtained from diisocyanate and polyol is chain extended with a diamine compound by urea bond, and an imide unit is introduced into the urea bond site with tetracarboxylic dianhydride. This PIUE can be manufactured through, for example, the following reaction formulas (A) to (C).

<Reaction Formula (A)>

[Chemical formula 3]

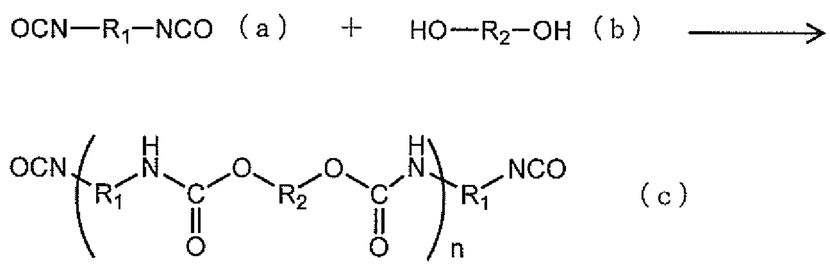

wherein, $R_1$, $R_2$ and n are the same as above.

<Synthesis of Urethane Prepolymer (c)>

As shown in the reaction formula (A), firstly, urethane prepolymer (c) having an isocyanate group at both ends of the molecule thereof is obtained from diisocyanate (a) and polyol (b). Since the PIUE (I) employs the urethane prepolymer (c) as an elastomer component, the elastic modulus in the rubber-like region (around room temperature) is lowered to impart more elastic properties, and by controlling the molecular weight of the urethane prepolymer (c), two successive imide units can be introduced into the main chain at a desired ratio, while controlling the distribution thereof.

Examples of the diisocyanate (a) include 2,4-tolylenediisocyanate (TDI), 2,6-tolylenediisocyanate (TDI), 4,4'-diphenylmethanediisocyanate (MDI), polymeric MDI (Cr. MDI), dianisidine diisocyanate (DADL), diphenylether diisocyanate (PEDI), pitolylene diisocyanate (TODI), naphthalene diisocyanate (MDI), hexamethylene diisocyanate (HMDI), isophorone diisocyanate (IPDI), lysine diisocyanate methyl ester (LDI), methaxylene diisocyanate (MXDI), 2,2,4-trimethylhexamethylene diisocyanate (TMDI), 2,4,4- trimethylhexamethylene diisocyanate (TMDI), dimer acid diisocyanate (DDI), isopropylidenebis (4-cyclohexyl isocyanate) (IPCI), cyclohexylmethane diisocyanate (hydrogenated MDI), methylcyclohexane diisocyanate (hydrogenated TDI) and TDI dimer (TT). These may be used either singly or as a mixture of two or more selected therefrom. Preferably, these are subjected to vacuum distillation.

Examples of the polyol (b) include polyether polyols such as polypropylene glycol (PPG), poly(oxytetramethylene)glycol (PTMG) and polymer polyol; polyester polyols such as adipate based polyol (condensed polyester polyol) and polycaprolactone based polyol; polycarbonate polyol; polybutadiene polyol; and acryl polyol. These may be used either singly or as a mixture of two or more selected therefrom.

It is preferable to use the polyol (b) after being subjected to vacuum drying under the conditions of 70°C to 90°C, 1 to 5 mmHg and about 10 to 30 hours. The weight average molecular weight of the polyol (b) is 100 to 10,000, preferably 300 to 5,000. These weight average molecular weights are obtained by measuring the polyol (b) through gel permeation chromatography (GPC), and expressing the obtained measured value in terms of polystyrene.

The above-mentioned diisocyanate (a) and the polyol (b) are mixed in a predetermined ratio, and the mixture is then allowed to react at room temperature for about 1 to 5 hours under an inert gas atmosphere such as argon gas. The mixing ratio (mol) between the diisocyanate (a) and the polyol (b), namely (a):(b), is preferably in the range of 1.1: 1.0 to 2.0:1.0. This enables the weight average molecular weight of the obtained urethane prepolymer (c) to be controlled at a predetermined value described later.

That is, the weight average molecular weight of the obtained urethane prepolymer (c) is 300 to 50,000, preferably 500 to 45,000. When the imide unit is introduced at a desired ratio while controlling the weight average molecular weight of the urethane prepolymer (c) within the above-mentioned range, it is capable of obtaining the PIUE (I) having excellent pliability and excellent adhesive properties with the substrate 2.

A harder PIUE (I) can be obtained as the urethane prepolymer (c) has a smaller weight average molecular weight in the above-mentioned range. In contrast, when the molecular weight thereof is smaller than 300, the PIUE (I) becomes too hard and the pliability thereof might be lowered. When it is over 50,000, the PIUE (I) becomes too soft, and the strength and thermal resistance thereof might be lowered. These weight average molecular weights are obtained by measuring the urethane prepolymer (c) by GPC, and expressing the obtained measured value in terms of polystyrene.

<Reaction Formula (B)>

[Chemical formula 4]

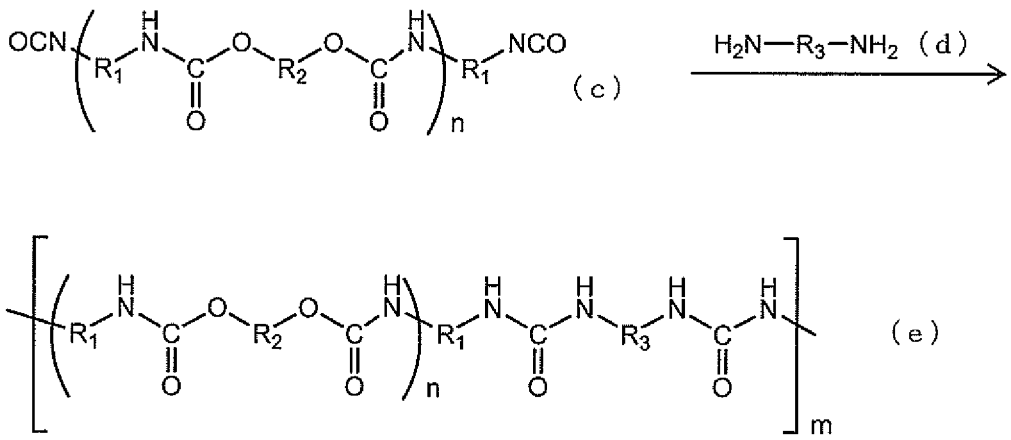

(c)

(e)

wherein, $R_1$ to $R_3$, n and m are the same as above.

<Synthesis of Polyurethane-Urea Compound (e)>

According to the reaction formula (B), a polyurethane-urea compound (e) as an imide precursor is synthesized using the urethane prepolymer (c) obtained above. That is, the polyurethane-urea compound (e) is obtained by subjecting the urethane prepolymer (c) to chain extension by urea bond using the diamine compound (d).

Examples of the diamine compound (d) include aromatic diamine compounds having a carbon number of 6 to 27 such as 1,4-diaminobenzene (also known as p-phenylenediamine, abbreviated as PPD), 1, 3-diaminobenzene (known as m-phenylenediamine, abbreviated as MPD), 2,4-diaminotoluene (known as 2,4-toluenediamine, abbreviated as 2,4-TDA), 4,4'-diaminodiphenylmethane (known as 4,4'-methylenedianiline, abbreviated as MDA), 4,4'-diaminodiphenylether (known as 4,4'-oxydianiline, abbreviated as ODA, DPE), 3,4'-diaminodiphenylether (known as 3,4'-oxydianiline, abbreviated as 3,4'-DPE), 3,3'-dimethyl-4,4'-diaminobiphenyl (known as o-tridine, abbreviated as TB), 2,2'-dimethyl-4,4'-diaminobiphenyl (known as m-tridine, abbreviated as m-TB), 2,2'-bis(trifluoromethyl)-4,4'-diaminobiphenyl (abbreviated as TFMB), 3,7-diamino-dimethyldibenzothiophen-5,5-dioxide (known as o-tridine sulfone, abbreviated as TSN), 4,4'-diaminobenzophenone, 3,3'-diaminobenzophenone, 4,4'-bis(4-aminophenyl) sulfide (known as 4,4'- thiodianiline, abbreviated as ASD), 4,4'-diaminodiphenyl sulfone (known as 4,4'-sulfonyldianiline, abbreviated as ASN), 4, 4'-diaminobenzanilide (abbreviated as DABA), 1,n-bis(4-aminophenoxy)alkane (n=3, 4 or 5, abbreviated as DAnMG), 1,3-bis (4-aminophenoxy)-2,2-dimethylpropane (abbreviated as DANPG), 1,2-bis[2-(4-aminophenoxy)ethoxy] ethane (abbreviated as DA3EG), 9,9-bis(4-aminophenyl)fluorene (abbreviated as FDA), 5(6)-amino-1-(4-aminomethyl)-1,3,3-trimethylindan, 1,4-bis(4-aminophenoxy)benzene (abbreviated as TPE-Q), 1,3-bis(4-aminophenoxy)benzene (known as resorcin oxydianiline, abbreviated as TPE-R), 1,3-bis(3-aminophenoxy)benzene (abbreviated as APB), 4,4'-bis(4-aminophenoxy) biphenyl (abbreviated as BAPB), 4,4'-bis(3-aminophenoxy)biphenyl, 2,2-bis(4-aminophenoxyphenyl)propane (abbreviated as BAPP), bis[4-(4-aminophenoxy)phenyl] sulfone (abbreviated as BAPS), bis[4-(3-aminophenoxy)phenyl] sulfone (abbreviated as BAPS-M), 2,2-bis[4-(4-aminophenoxy)phenyl]hexafluoropropane (abbreviated as HFBAPP), 3,3'-dicarboxy-4,4'-diaminodiphenylmethane (abbreviated as MBAA), 4,6-dihydroxy-1,3-phenylenediamine (known as 4,6-diaminoresorcin), 3,3'-dihydroxy-4,4'-diaminobiphenyl (known as 3,3'-dihydroxybendizine, abbreviated as HAB) and 3,3',4,4'-tetraaminobiphenyl (known as 3,3'-diaminobendizine, abbreviated as TAB); aliphatic or alicyclic diamine compounds having a carbon number of 6 to 24 such as 1,6-hexamethylenediamine (HMDA), 1,8-octamethylenediamine (OMDA), 1,9-nonamethylene diamine, 1,12-dodecamethylene diamine (DMDA), 1-amino-3-aminomethyl-3,5,5-trimethylcyclohexane (known as isophorondiamine), 4,4'-dicyclohexylmethanediamine and cyclohexanediamine; and silicone based diamine compounds such as 1,3-bis(3-aminopropyl)-1,1,3,3- tetramethyldisiloxane. These may be used either singly or as a mixture of two or more selected therefrom.

Especially, the use of 1,6-hexamethylenediamine (HMDA) provides the PIUE (I) having excellent strength. The elastic modulus of the PIUE (I) can be adjusted by selecting the diamine compound (d) described above.

The urethane prepolymer (c) and the above-mentioned diamine compound (d) are mixed equimolecularly, preferably in an $NCO/NH_2$ ratio of approximately 1.0, and the mixture is then subjected to solution polymerization reaction or bulk polymerization reaction in an inert gas atmosphere such as argon gas, at room temperature to 100°C, preferably 50°C to 100°C, for about 2 to 30 hours.

Examples of solvents usable for the solution polymerization reaction include N,N-dimethylacetoamide, N-methyl-2-pyrrolidone (NMP), N-hexyl-2-pyrrolidone and 1,3-dimethyl-2-imidazolidone. Particularly preferred are N,N-dimethylacetoamide, N-methyl-2-pyrrolidone (NMP), N-hexyl-2-pyrrolidone and 1,3-dimethyl-2-imidazolidone. These solvents may be used either singly or as a mixture of two or more selected therefrom. It is preferable to use those after being subjected to dehydration process according to the usual method.

<Reaction Formula (c)>

[Chemical formula 5]

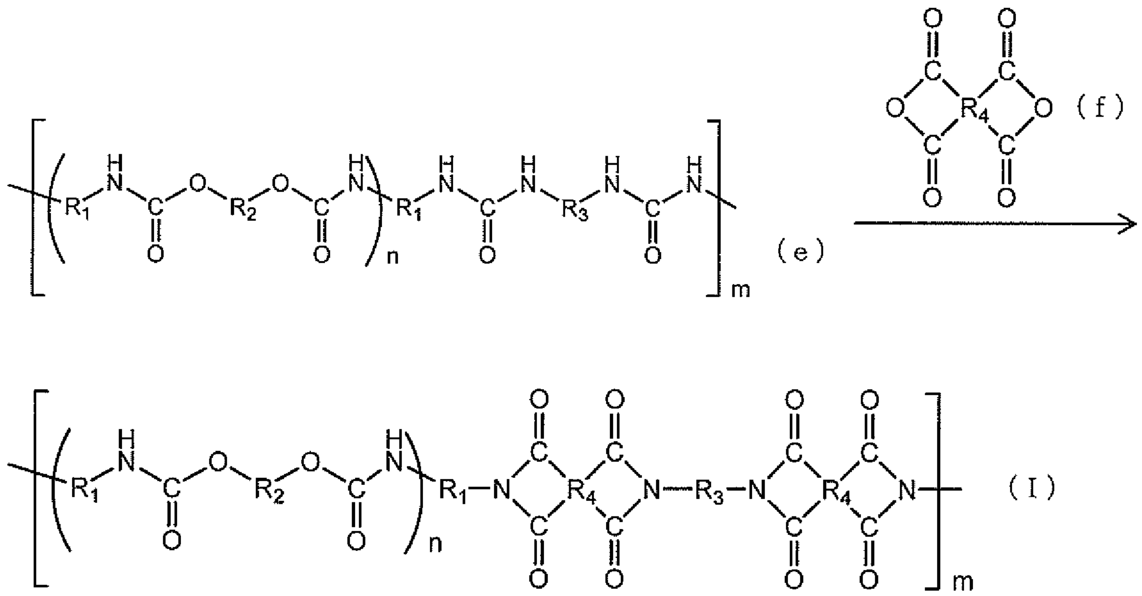

wherein, $R_1$ to $R_4$, n and m are the same as above.

<Synthesis of PIUE (I)>

According to a reaction formula (C), a PIUE (I) is synthesized using the polyurethane-urea compound (e) obtained above. That is, the PIUE (I) as a block copolymer is obtained by introducing an imide unit into a urea bond site using tetracarboxylic dianhydride (f).

Examples of the tetracarboxylic dianhydride (f) include aromatic tetracarboxylic dianhydrides having a carbon number of 6 to 18 such as pyromellitic dianhydride (PMDA), oxydiphthalic dianhydride (ODPA), biphenyl-3,4,3',4'-tetracarboxylic dianhydride (BPDA), benzophenone-3,4,3',4'-tetracarboxylic dianhydride (BTDA), diphenylsulfone-3,4,3',4-tetracarboxylic dianhydride (DSDA), 4,4'-(2,2-hexafluoroisopropylidene)bis(phthalic anhydride) (6FDA) and m(p)-terphenyl-3,4,3',4'-tetracarboxylic dianhydride; and alicyclic tetracarboxylic dianhydrides having a carbon number of 4 to 6 such as cyclobutane-1,2,3,4-tetracarboxylic dianhydride and 1-carboxymethyl-2,3,5-cyclopentanetricarboxylic-2,6:3,5-dianhydride. These may be used either singly or as a mixture of two or more selected therefrom.

An imidization reaction between the polyurethane-urea compound (e) and the tetracarboxylic dianhydride (f) is carried out. The imidization reaction may be carried out in the presence or absence of a solvent. When the imidization

reaction is carried out in the presence of a solvent, firstly, the polyurethane-urea compound (e) and the above-mentioned tetracarboxylic dianhydride (f) are added in a predetermined ratio into the solvent. The mixture is then allowed to react in an inert gas atmosphere such as argon gas, at 100°C to 300°C, preferably 135°C to 200°C, more preferably 150 °C to 170°C, for about 1 to 10 hours, thereby obtaining a solution containing polyurethane amic acid (PUA) (a PUA solution) represented by the following formula (g).

[Chemical formula 6]

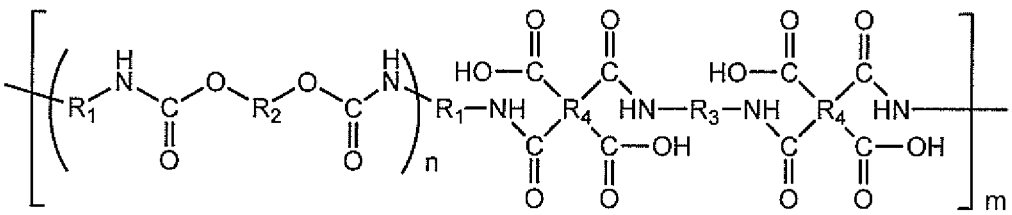

(g)

wherein, $R_1$ to $R_4$, n and m are the same as above.

Preferably, the polyurethane-urea compound (e) and the tetracarboxylic dianhydride (f) are mixed together so that the mixing ratio (mol) between the diamine compound (d) and the tetracarboxylic dianhydride (f) used to synthesize the polyurethane-urea compound (e) is 1:2 to 1:2.02 in the ratio between diamine compound (d) and the tetracarboxylic dianhydride (f). This ensures the introduction of the imide units into the urea bond site.

Examples of usable solvents include the same solvents as exemplified above in the solution polymerization reaction of the reaction formula (B). When the polyurethane-urea compound (e) is obtained by the solution polymerization reaction in the reaction formula (B), the imidization reaction may be carried out in the solvent.

Subsequently, the PUA solution thus obtained is poured into, for example, a cylindrical molding and formed into a film shape by centrifugal molding while rotating the cylindrical molding, at 100°C to 300°C, preferably 135°C to 200°C, and more preferably 150°C to 170°C, at 100 to 2,000 rpm for 30 minutes to 2 hours.

Then, the film-shaped PIUE (I) can be obtained by subjecting the film-shaped PUA to a heat treatment (dehydration condensation reaction). Preferably, the heat treatment is carried out under the conditions that the PUA is not thermally decomposed, specifically under the reduced pressure conditions at 150°C to 450°C, preferably 150°C to 250°C for about 1 to 5 hours.

When the imidization reaction is carried out in the absence of a solvent, the reaction can also be carried out within an extruder provided with heating means having an exhaust system, besides any usual stirring tank reactor. Therefore, the obtained PIUE (I) can be extruded and directly molded into a film shape.

The PIUE (I) thus obtained usually has a glass transition temperature (Tg) of -30°C to -60°C, as well as high elasticity and a wide temperature range of rubber-like elastic region. The reasons for this seem to be as follows. That is, as described earlier, in the PIUE (I), the two successive imide units can be introduced into the main chain at a desired ratio (imide fraction) while controlling the distribution thereof, so that the aggregation of hard segments composed of these imide units become uniform and strong. Hence, the PIUE (I) forms a more uniform and stronger microphase separation structure, and the glass transition temperature thereof is lowered to widen the temperature range of the rubber-like elastic region.

The weight average molecular weight of the PIUE (I) is 10,000 to 1000,000, preferably 50,000 to 800,000, and more preferably 50,000 to 500,000. These weight average molecular weights are obtained by measuring the PUA solution by GPC, and expressing the obtained measured value in terms of polystyrene. The reason why the PUA solution instead of the PIUE (I) is measured by GPC is that the PIUE (I) is insoluble in the solvent.

By adjusting the ratio of the imide fraction (the ratio of the content of the imide component) of the PIUE (I), namely the ratio of the imide component within the imide-modified elastomer, the elastic modulus can be adjusted easily. The imide fraction may be arbitrarily determined depending on the elastic modulus or the like, and no special limitation is imposed thereon. It is usually 25% by weight or below, preferably 15% by weight or below. A proper lower limit value thereof is usually 5% by weight or below. The imide fraction is a value calculated from the charge amounts of the raw materials thereof, namely, the diisocyanate (a), the polyol (b), the diamine compound (d) and the tetracarboxylic dianhydride (f), more specifically, a value calculated from the following equation ($\alpha$).

[Equation 1]

$$\text{Imide fraction (\%)} = [(W_{a'}+W_c+W_d)/W_{total}]\times 100 \cdots (\alpha)$$

wherein, $W_{total}$ denotes $W_a+W_b+W_c+W_d$;
$W_a$ denotes diisocyanate charge amount (mol) × diisocyanate formula weight;
$W_b$ denotes polyol charge amount (mol) × polyol formula weight;
$W_c$ denotes diamine compound charge amount (mol) × diamine compound formula weight;
$W_d$ denotes tetracarboxylic dianhydride charge amount (mol) ×tetracarboxylic dianhydride formula weight; and
$W_{a'}$ denotes [diisocyanate charge amount (mol) - polyol charge amount (mol)] × diisocyanate formula weight.

The thickness of the elastic layer 3 is 50 to 1,000 μm, preferably 100 to 200 μm. This achieves, for example, excellent transfer properties. In contrast, the thickness of the elastic layer 3 beyond the above range is unsuitable. That is, the thickness below 50 μm lowers the pliability required for the elastic layer 3, and the thickness above 1,000 μm increases the total thickness of the belt and adversely affects bending properties and the like.

The mold releasing resin layer 4 is for imparting the surface properties and mold releasing properties of the toner to the belt 1. In terms of mold releasing properties, thermal resistance and bending resistance, the mold releasing resin layer 4 is preferably composed of fluoro resin or the like. Examples of the fluoro resin include tetrafluoroethylene resin (PTFE), tetrafluoroethylene/perfluoroalkoxyethylene resin (PFA) and tetrafluoroethylene/hexafluoropropylene copolymer (FEP). These may be used either singly or as a mixture of two or more selected therefrom. By disposing the mold releasing resin layer 4 on the elastic layer 3, without using silicone oil or the like, the mold releasing properties of the toner can be obtained, and the effect of preventing paper powder sticking can also be obtained, thus achieving oilless.

Preferably, the mold releasing resin layer 4 is disposed on the elastic layer 3 so as to have such a thickness that ensures the mold releasing properties of the toner and the paper powder, and does not impair the pliability of the elastic layer 3. Specifically, the mold releasing resin layer 4 has a thickness of 5 to 50 μm, preferably 10 to 30 μm. On the other hand, when the thickness of the mold releasing resin layer 4 is smaller than 5 μm, the mold releasing properties is insufficient and durability is poor. When it is greater than 50 μm, the pliability of the elastic layer 3 might be impaired. Alternatively, the above-mentioned conductive agent may be dispersed in the mold releasing resin layer 4 in order to prevent offset due to electrification.

<Manufacturing Method>

One preferred embodiment of the method of manufacturing the above-mentioned belt 1 for an image forming apparatus will be described below. For increasing the usefulness of the invention, the belt 1 is preferably applied to an intermediate transfer belt or a fixing belt as a seamless belt. Therefore, as an example of the method of manufacturing a seamless belt 1, the case where the PIUE (I) is used as an imide-modified elastomer constituting the elastic layer 3 is now described.

The seamless belt 1 is obtainable by, for example, centrifugal molding method. That is, a polyamide acid varnish (polyimide varnish) as the precursor of polyimide resin and the PUA solution described above are firstly prepared. No special limitation is imposed on the polyimide varnish, and one that is varnished by adding polyamide acid to a suitable solvent, or a commercially available one may be used. A specific example is a product named as "U-VARNISH-A" manufactured by Ube Industries, Ltd.

When the belt is used as an intermediate transfer belt, it is necessary to add a conductive agent in order to impart electric conductivity to the polyimide varnish. For example, when carbon black is added as a conductive material, a varnish solution for centrifugal molding is prepared by adding 10 to 30 parts by weight, preferably about 20 parts by weight of carbon black to 100 parts by weight of polyimide resin, and stirring for 30 minutes to 2 hours, preferably about 1 hour with a stirrer, followed by defoaming process. The solid fraction of the varnish solution is 10% to 30% by weight, preferably 15% to 25% by weight, and more preferably about 18% by weight. A specific example of the carbon black is a product named as "TOKABLACK #5500F" manufactured by TOKAI CARBON CO., LTD.

The sold fraction of the PUA solution is 10% to 30% by weight, preferably about 20% by weight.
In a belt molding, the PUA solution is poured into the centrifugal molding machine heated to 110°C to 130°C, preferably about 120°C. For facilitating removal of a laminate film obtained in the following manner from the centrifugal molding machine, it is preferable to apply mold release process or a mold release agent to the inner surface of the drum of the centrifugal molding machine, or form a layer having mold release properties by using resin.

Subsequently, while rotating the drum of the centrifugal molding machine at 400 to 600 rpm, preferably about 500 rpm, the PUA solution is poured into the drum and allowed to extend throughout the drum. Thereafter, the rotation speed is increased to 900 to 1,100 rpm, preferably about 1,000 rpm, and heat treatment is carried out for 20 to 40

minutes, preferably about 30 minutes, and then cooled to 50°C to 70°C, preferably about 60°C, thereby forming the PUA film on the inner surface of the drum.

Subsequently, the polyimide varnish thus prepared is poured into the inner surface of the PUA film, while rotating the drum at 400 to 600 rpm, preferably about 500 rpm. Thereafter, a laminate film (the substrate 2 and the elastic layer 3) is formed by performing heat treatment for 30 to 60 minutes, preferably about 45 minutes, while rotating the drum at a rotation speed of 50 to 200 rpm, preferably about 100 rpm, and heating to 110°C to 130°C, preferably about 120°C.

After cooling to room temperature, the laminate film is removed from the drum. In order to prevent deformation due to shrinkage, the laminate film is set into a mold after being subjected to surface mold releasing process, and a mold releasing resin layer 4 is formed by coating the surface thereof with fluoro resin or the like. This is then heat-treated under reduced pressure at 300°C to 400°C, preferably about 350°C, for 20 to 40 minutes, preferably about 30 minutes. The obtained film is slit into a proper dimension, resulting in the seamless belt 1.

Although the case of sequentially forming the substrate 2 and the elastic layer 3 by centrifugal molding has been described in the above preferred embodiment, the invention is not limited thereto. For example, under the centrifugal molding conditions described above, cylindrical seamless substrate 2 and elastic layer 3 are prepared, and a cylindrical seamless mold releasing resin layer 4 is prepared by extrusion molding method or the like. The seamless belt 1 may be obtained by integrating them with one-liquid or two-liquid type silicone based elastic adhesive, urethane based elastic adhesive, sheet-like hot melt type silicone based adhesive or silane modified-polyimide based adhesive, or alternatively by heat-pressing them.

When the seamless belt 1 thus obtained is used as an intermediate transfer belt, the total thickness of the belt 1 is preferably 100 to 150 μm. When used as a fixing belt, the total thickness of the belt 1 is preferably 200 to 300 μm.

On the other hand, when the total thickness of the belt 1 is smaller than these corresponding thicknesses, it is difficult to satisfy the mechanical characteristics required as the intermediate transfer belt or the fixing belt. When it is greater than these corresponding thicknesses, a roll bending section may be deformed to cause a belt surface stress concentration, thus leading to cracks in the mold releasing resin layer 4.

The invention will be described in detail with reference to synthesis examples and examples, but it is to be understood that the invention is not limited to the following synthesis examples and examples.

The following two types of PIUEs (1) and (2) were synthesized.

## Synthesis Example 1

The PIUE (1) was synthesized according to the following formulas.

[Chemical formula 7]

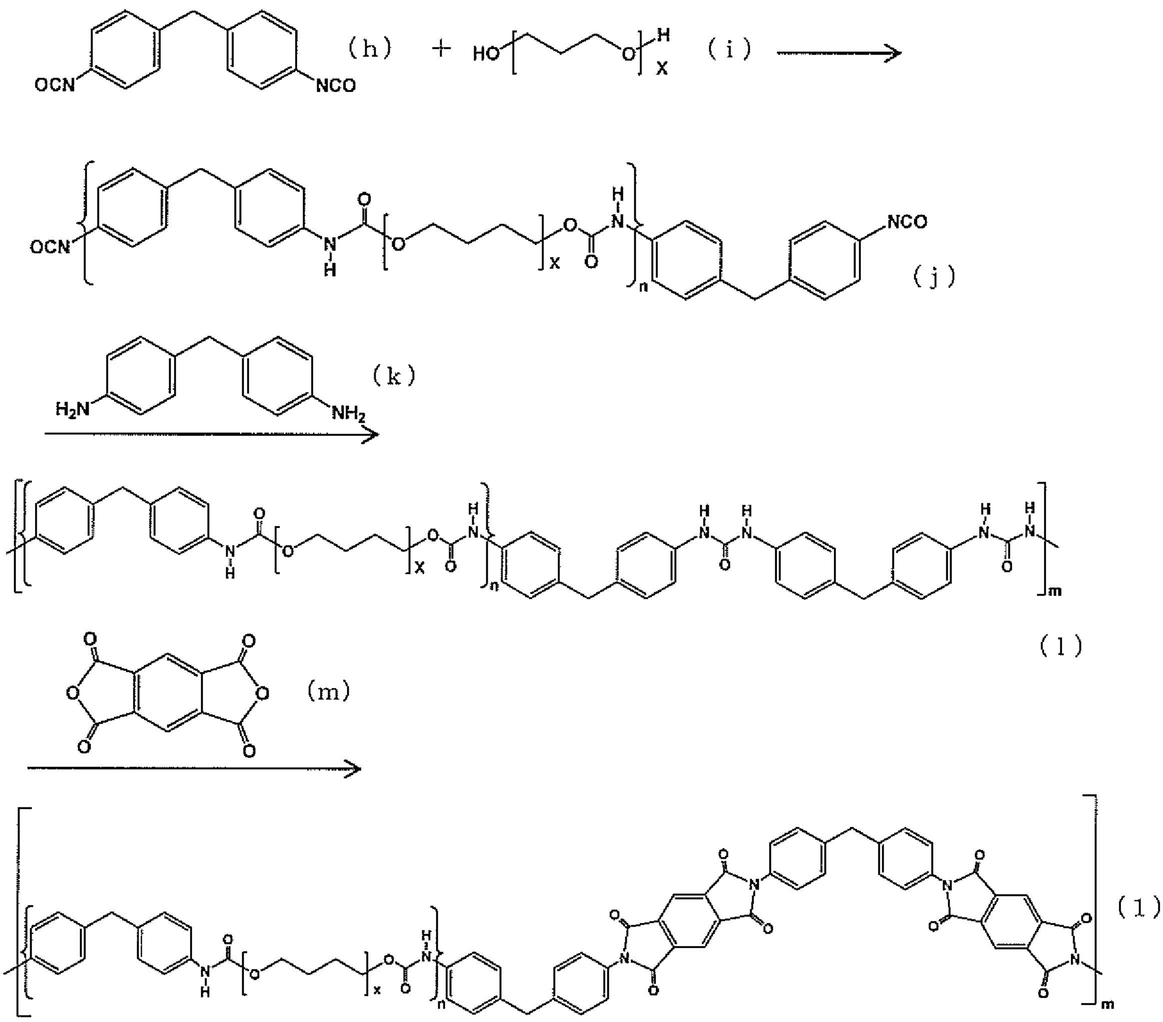


wherein, n represents an integer of 1 to 100, m represents an integer of 2 to 100, and x represents an integer of 5 to 100.

<Synthesis of Urethane Prepolymer (j)>

Firstly, 4,4'-diphenyl methane diisocyanate (MDI) (h), manufactured by Nippon Polyurethane Industry Co., Ltd., was vacuum distilled. Poly(oxytetramethylene)glycol (PTMG) (i), whose product name is "PTMG1000" having a weight average molecular weight of 1,000 manufactured by Hodogaya Chemical Co., Ltd., was vacuum dried at 80°C and 2 to 3 mmHg for 24 hours.

Subsequently, 23.8 g of the MDI (h) and 76.2 g of the PTMG (i) were put in a 500-ml-four-mouth separable flask provided with a stirrer and a gas introducing tube, and stirred in argon gas atmosphere at 80°C for 2 hours, thereby obtaining urethane prepolymer (j) having an isocyanate group at both ends of each molecular. The urethane prepolymer (j) was measured by GPC, and the weight average molecular weight thereof in terms of polystyrene was $4.6\times10^4$.

<Synthesis of Polyurethane-Urea Compound (1)>

A solution of 10g of the urethane prepolymer (j) obtained above in 60 ml of dehydrated N-methyl-2-pyrrolidone (NMP), and a solution of 0.378 g of 4,4-diaminodiphenylmethane (MDA) (k) in 20 ml of dehydrated NMP were put in a 500-ml-four-mouth separable flask provided with a stirrer and a gas introducing tube, and stirred in argon gas atmosphere

at room temperature (23°C) for 24 hours, thereby obtaining a solution of polyurethane-urea compound (1).

<Synthesis of PIUE (1)>

Into the solution of the polyurethane-urea compound (1) obtained above, 0.831 g of pyromellitic dianhydride (PMDA) (m) was added and stirred in argon gas atmosphere at 150°C for 2 hours, thereby obtaining a polyurethane amic acid (PUA) solution. The PUA solution thus obtained was then poured into a centrifugal molding machine and subjected to centrifugal molding at 150°C and 1,000 rpm for 1 hour, thereby obtaining a PUA sheet. The PUA sheet was then heat treated in a vacuum desiccator at 200°C for 2 hours (dehydration condensation reaction), thereby obtaining a sheet-shaped PIUE (1) having a thickness of 100 μm (15% by weight of imide fraction). This imide fraction was a value calculated from the above-mentioned equation (α).

The IR spectrum of the obtained PIUE (1) was measured by KBr method. The result is shown in Fig. 2.
As apparent from Fig. 2, the absorption derived from the imide ring was observed at 1780 $cm^{-1}$, 1720 $cm^{-1}$ and 1380 $cm^{-1}$.

## Synthesis Example 2

An urethane prepolymer (j) having a weight average molecular weight of $2.5\times10^4$ was obtained in the same manner as in Synthesis Example 1, except to use 27.3 g of the MDI (h) instead of 23.8 g, and 72.7 g of the PTMG (i) instead of 76.2 g. Subsequently, a solution of a polyurethane-urea compound (l) was obtained in the same manner as in Synthesis Example 1, except to use 0.721 g of the MDA (k) instead of 0.378 g.

A sheet-shaped PIUE (2) having a thickness of 100 μm (25% by weight of imide fraction) was obtained in the same manner as in Synthesis Example 1, except to add 1.586 g of the PMDA (m) instead of 0.831 g into the solution of the polyurethane-urea compound (l). The IR spectrum of the PIUE (2) was measured in the same manner as in Synthesis Example 1. The result is shown in Fig. 3.
As apparent from Fig. 3, the absorption derived from the imide ring was observed at 1780 $cm^{-1}$, 1720 $cm^{-1}$ and 1380 $cm^{-1}$.

The elastic modulus of each of these PIUEs (1) and (2) was measured. Its measuring method is as follows, and the results thereof are shown in Table 1.

<Measuring Method of Elastic Modulus>

Using a dynamic viscoelasticity measuring instrument "DMS 6100" manufactured by Seiko Instruments Inc., the storage elastic modulus E' at 50°C was measured in the step of raising temperature from -100°C to 400°C at 10 Hz and 5°C/min.

[Table 1]

| | Imide fraction (% by weight) | Storage elastic modulus E' at 50°C (Pa) |
|---|---|---|
| PIUE (1) | 15 | $2.4\times10^7$ |
| PIUE (2) | 25 | $5.1\times10^7$ |

It can be seen from Table 1 that the imide fraction adjustment enables the elastic modulus adjustment. This indicates that the elastic modulus of the elastic layer can be easily adjusted to a suitable value.

## Example 1

A belt for an image forming apparatus was manufactured by using the PIUE (1) (15% by weight in imide fraction, and $2.4\times10^7$ Pa in elastic modulus) out of these PIUEs (1) and (2) obtained in Synthesis Examples 1 and 2, respectively. The peel strength between the substrate and the elastic layer of this belt was measured.

<Manufacturing of Belt for Image Forming Apparatus>

The PIUE solution obtained in Synthesis Example 1 (namely, the PUA solution before the dehydration condensation reaction in Synthesis Example 1) was processed at 120°C for 30 minutes by using a centrifugal molding machine, thereby obtaining a PIUE film having a thickness of 100 μm. The product named as "U-VARNISH-A" manufactured by Ube Industries, Ltd. was poured into the inner surface of the PIUE film and heat treated at 120°C for 45 minutes, thereby obtaining a laminate film.

The laminate film was removed from the drum and then set to a molding, followed by a heat treatment at 350°C for 30 minutes. This results in a seamless belt for an image forming apparatus having a thickness of 200 μm. The belt is constructed from the structure, one surface of which is composed of polyimide and the other surface is imide-modified polyurethane elastomer, that is, the substrate composed of polyimide resin, and the elastic layer composed of the PIUE (1) disposed on the substrate.
The peel strength of the belt for an image forming apparatus obtained above was measured. Its measuring method is as follows, and the result thereof is presented in Table 2.

<Measurement of Peel Strength>

The belt for an image forming apparatus obtained above was punched out in the shape of a stick having a width of 10mm, and the peel strength between the substrate and the elastic layer was measured by a tensile testing machine "AG-2000G" manufactured by Shimadzu Corporation. The tensile speed was set at 50 mm/min.

**Comparative Example 1**

A film having a thickness of 100 μm was obtained by subjecting the product named as "U-VARNISH-A" manufactured by Ube Industries, Ltd. to a heat treatment at 120°C for 45 minutes by using a centrifugal molding machine. Subsequently, a laminate film was manufactured by pouring a two-liquid type curing silicone rubber "KE1300" manufactured by Shin-Etsu Silicone Co., Ltd. into the inner surface of the film, followed by heat treatment at 120°C for 3 hours. The laminate film was removed from the drum and then set to a molding, followed by a heat treatment at 350°C for 30 minutes. This results in a seamless belt for an image forming apparatus having a thickness of 200 μm. The belt is constructed from the structure, one surface of which is composed of polyimide and the other surface is silicone rubber, that is, the substrate composed of polyimide resin, and the elastic layer composed of silicone rubber disposed on the substrate.
The peel strength of the belt for an image forming apparatus obtained above was measured in the same manner as in Example 1. The result thereof is presented in Table 2.

**Comparative Example 2**

A film having a thickness of 100 μm was obtained by subjecting the product named as "U-VARNISH-A" manufactured by Ube Industries, Ltd. to a heat treatment at 120°C for 45 minutes by using a centrifugal molding machine. Subsequently, a laminate film was manufactured by pouring a one-liquid curing type silicone rubber "SE5060" manufactured by Dow Coming Toray Co., Ltd. into the inner surface of the film, followed by a heat treatment at 60°C for 3 hours. The laminate film was removed from the drum and then set to a molding, followed by a heat treatment at 350°C for 30 minutes. This results in a seamless belt for an image forming apparatus having a thickness of 200 μm. The belt is constructed from the structure, one surface of which is composed of polyimide and the other surface is silicone rubber, that is, the substrate composed of polyimide resin, and the elastic layer composed of silicone rubber disposed on the substrate.
The peel strength of the belt for an image forming apparatus obtained above was measured in the same manner as in Example 1. The result thereof is presented in Table 2.
[Table 2]

| | Peel strength (N/10 mm) | Note |
|---|---|---|
| Example 1 | 4.7 | Peeled at the interface between a polyimide resin and an imide-modified polyurethane elastomer |
| Comparative Example 1 | 0.1 | Peeled at the interface between a polyimide resin and a silicone rubber |
| Comparative Example 2 | 1.5 | Broke in a silicone rubber part because of low strength of silicone rubber |

As apparent from Table 2, the belt for an image forming apparatus of Example 1, in which the substrate is composed of polyimide resin and the elastic layer is composed of an imide-modified polyurethane elastomer, has a higher peel strength between the substrate and the elastic layer than the belt for an image forming apparatus of Comparative Example 1 or 2, in which substrate is composed of polyimide resin and the elastic layer is composed of silicone rubber. From this result, it can be said that the elastic layer composed of the imide-modified elastomer having the imide component increases the affinity with the substrate composed of polyimide resin, thereby suppressing durability deterioration due to the separation therebetween.

## Claims

1. A belt for an image forming apparatus having at least an elastic layer on a substrate comprising polyimide resin, wherein the elastic layer comprises an imide-modified elastomer.

2. The belt for an image forming apparatus according to claim 1, wherein the imide-modified elastomer is an imide-modified polyurethane elastomer.

3. The belt for an image forming apparatus according to claim 2, wherein the imide-modified polyurethane elastomer is represented by the following general formula (I):

[Chemical formula 8]

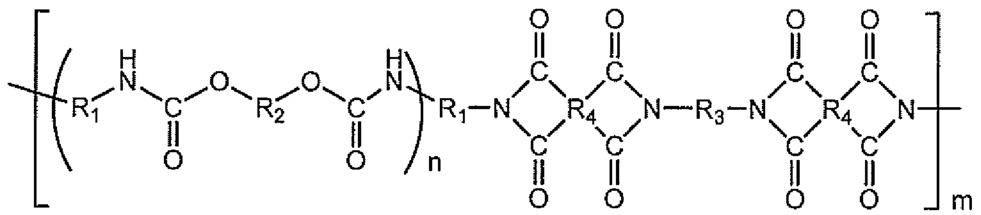

(I)

wherein, $R_1$ represents a divalent organic group having an aromatic ring or an aliphatic ring; $R_2$ represents a divalent organic group having a weight average molecular weight of 100 to 10,000; $R_3$ represents a divalent organic group having an aromatic ring, an aliphatic ring or an aliphatic chain; $R_4$ represents a tetravalent organic group having 4 or more carbon atoms; n represents an integer of 1 to 100; and m represents an integer of 2 to 100.

4. The belt for an image forming apparatus according to claim 3, wherein in the general formula (I), the $R_1$ represents residues except for isocyanate groups (-NCO) in diisocyanate capable of forming urethane prepolymer together with polyol, and the $R_2$ represents residues except for two hydroxyl groups (-OH) in polyol capable of forming urethane prepolymer together with diisocyanate.

5. The belt for an image forming apparatus according to claim 3, wherein in the general formula (I), the $R_3$ represents residues except for amino groups ($-NH_2$) in at least one diamine compound selected from aromatic diamine compounds having a carbon number of 6 to 27, aliphatic diamine compounds having a carbon number of 6 to 24, and alicyclic diamine compounds having a carbon number of 6 to 24, each of which is capable of chain extending urethane prepolymer by urea bond.

6. The belt for an image forming apparatus according to claim 3, wherein in the general formula (I), the $R_4$ is a residue of at least one kind of tetracarboxylic dianhydride selected from aromatic tetracarboxylic dianhydrides having a carbon number of 6 to 18 such as pyromellitic dianhydride (PMDA), oxydiphthalic dianhydride (ODPA), biphenyl-3,4,3',4'-tetracarboxylic dianhydride (BPDA), benzophenone-3,4,3',4'-tetracarboxylic dianhydride (BTDA), diphenylsulfone-3,4,3',4'-tetracarboxylic dianhydride (DSDA), 4,4'-(2,2-hexafluoroisopropylidene) bis(phthalic anhydride) (6FDA) and m(p)-terphenyl-3,4,3',4'-tetracarboxylic dianhydride; and alicyclic tetracarboxylic dianhydrides having a carbon number of 4 to 6 such as cyclobutane-1,2,3,4-tetracarboxylic dianhydride and 1-carboxymethyl-2,3,5-cyclopentanetricarboxylic-2,6:3,5-dianhydride, each of which is capable of introducing an imide unit into a urea bond site.

7. The belt for an image forming apparatus according to claim 1, wherein a storage elastic modulus E' at 50°C of the imide-modified elastomer is in the range of $1.0\times10^6$ to $6.0\times10^7$ Pa.

**8.** The belt for an image forming apparatus according to any one of claims 1 to 3, wherein a mold releasing resin layer is disposed on the elastic layer.

**9.** The belt for an image forming apparatus according to any one of claims 1 to 3, serving as an intermediate transfer belt.

**10.** The belt for an image forming apparatus according to any one of claims 1 to 3, serving as a fixing belt.

Fig. 1

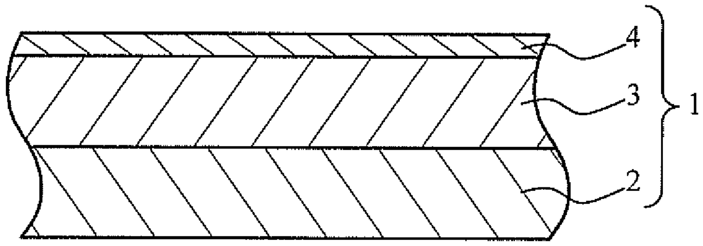


Fig. 2

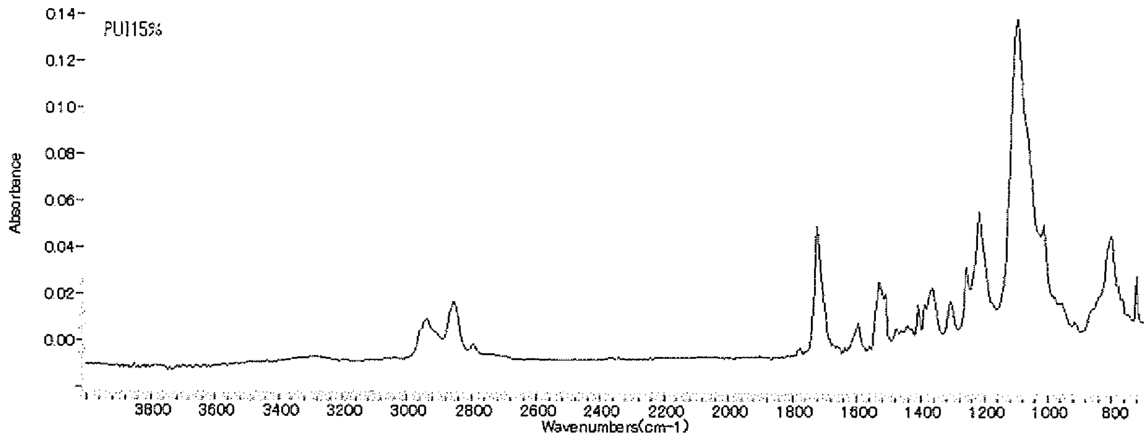


Fig. 3

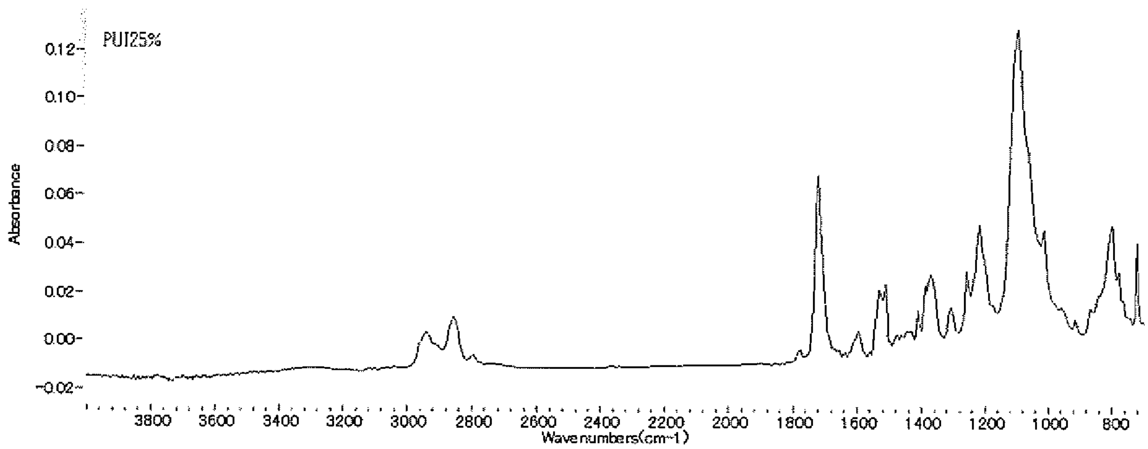

**INTERNATIONAL SEARCH REPORT**

International application No.
PCT/JP2007/067925

A. CLASSIFICATION OF SUBJECT MATTER
*G03G15/00*(2006.01)i, *B32B27/34*(2006.01)i, *G03G15/16*(2006.01)i, *G03G15/20*(2006.01)i

According to International Patent Classification (IPC) or to both national classification and IPC

B. FIELDS SEARCHED

Minimum documentation searched (classification system followed by classification symbols)
G03G15/00, B32B27/34, G03G15/16, G03G15/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-76241 A (Tokai Rubber Industries, Ltd.), 14 March, 2003 (14.03.03), Par. Nos. [0001], [0008] to [0045], [0091] to [0096], [0103] to [0110] (Family: none) | 1-10 |
| Y | JP 2006-72341 A (Sumitomo Electric Fine Polymer Inc.), 16 March, 2006 (16.03.06), Claims 1 to 3; Par. No. [0003]; Fig. 6 (Family: none) | 1-10 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 November, 2007 (26.11.07) | 04 December, 2007 (04.12.07) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/067925

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-199669 A (Ajinomoto Co., Inc.), 27 July, 1999 (27.07.99), Claims & WO 1999/036454 A1 & EP 1048680 A1 & US 6335417 B1 | 3-6,8-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003131492 A
- JP 11015303 A
- JP 2001109276 A
- JP 2560727 B